**Europäisches Patentamt**

**European Patent Office**

**Office européen des brevets**

(11) Veröffentlichungsnummer : **0 077 440**
**B1**

# EUROPÄISCHE PATENTSCHRIFT

(45) Veröffentlichungstag der Patentschrift :
09.10.85

(21) Anmeldenummer : 82106710.5

(22) Anmeldetag : 24.07.82

(51) Int. Cl.⁴ : **B 23 Q 11/08, F 16 P 3/02**

(54) **Teleskopabdeckung für Werkzeugmaschinen.**

(30) Priorität : 20.10.81 DE 8130522 U

(43) Veröffentlichungstag der Anmeldung :
27.04.83 Patentblatt 83/17

(45) Bekanntmachung des Hinweises auf die Patenterteilung : 09.10.85 Patentblatt 85/41

(84) Benannte Vertragsstaaten :
**DE FR GB IT**

(56) Entgegenhaltungen :
DE-A- 2 047 794
DE-A- 2 102 951

(73) Patentinhaber : **Cremer, Heinrich**
**Einruhrstrasse 94**
**D-4050 Mönchengladbach 2 (DE)**

(72) Erfinder : **Cremer, Heinrich**
**Einruhrstrasse 94**
**D-4050 Mönchengladbach 2 (DE)**

(74) Vertreter : **Wangemann, Horst, Dipl.-Ing.**
**Stresemannstrasse 28**
**D-4000 Düsseldorf (DE)**

## Beschreibung

Die Erfindung betrifft eine Teleskopabdeckung für Werkzeugmaschinen der im Oberbegriff des Hauptanspruches genannten Art.

Abdeckungen mit sich auf dem Maschinenbett und aufeinander abstützenden Abdeckkästen sind aus der DE-OS 1 602 868 und dem DE-GM 79 25 807 bekannt. Ferner ist eine Abdeckung mit den Merkmalen des Oberbegriffs des Hauptanspruches in Benutzung.

Der Erfindung liegt demgegenüber die Aufgabe zugrunde, mit einfachen konstruktiven Mitteln eine verbesserte Teleskopabdeckung der im Gattungsbegriff des Hauptanspruches genannten Art zu schaffen, die nicht nur ein dichtes Abdecken des Maschinenbettes gewährleistet, bei der vielmehr auch ein seitliches Ausweichen der Kästen ohne zusätzliche Führungsmittel am Maschinenbett oder an einer diesem benachbarten Maschinenwand ebenso verhindert, wie ein sicheres Abdecken der Zwischenräume zwischen den Abdeckkästen erreicht werden soll, d. h. ein Eindringen von Wasser und Spänen zwischen die aufeinander folgenden Kästen vermieden wird. In weiterer Aufgabenstellung soll ein leichtes Zusammensetzen der Kästen zu der Abdeckung möglich sein.

Zur Lösung dieser Aufgabe sind die Merkmale des kennzeichnenden Teils des Hauptanspruches vorgesehen. Die Merkmale der Unteransprüche dienen der Verbesserung und Weiterentwicklung der Merkmale des Hauptanspruches.

Durch das Unter- und Überfassen der Abwinklungen und Abkantungen wird eine zur Seite und nach oben sichernde, gleitende Führung der Kästen aneinander bei gleichzeitiger Abdeckung der Zwischenräume zwischen den nach oben gerichteten Seitenwänden erreicht, wobei auf die Deckwand auftreffende Späne und Wasser unter der Abwinklung und an der Abkantung gefangen werden. Bei entsprechender Ausbildung der Abkantungen und Abwinklungen läßt sich ein Eindrehen dieser Teile in ihre Arbeitsstellung von der Seite her erreichen, d. h. es bedarf keines kopfseitigen Ineinanderschiebens der genannten Teile beim Zusammensetzen der Abdeckung.

Durch die DE-PS 1 552 349 ist eine Abdeckvorrichtung für Führungsbahnen an Werkzeugmaschinen od. dgl. bekannt, bei der auf der Unterseite der Deckplatten parallel zu ihrer Verschieberichtung unterschnittene Führungsleisten angeordnet sind, die durch Durchbrüche von hinterschnittenen Sperrleisten der jeweils oberen Deckplatte ragen, was dem Vermeiden des Abhebens der Deckplatten voneinander dient. In ausgezogenem Zustand der Abdeckung greifen hakenartige Teile an der Deckplattenunter- und -oberseite ineinander.

Auf der Zeichnung sind Ausführungsbeispiele der erfindungsgemäßen Abdeckung dargestellt und zwar zeigt

Figur 1 einen Längsschnitt durch mehrere Abdeckkästen einer gattungsmäßigen Abdeckung ohne Seitenwände,

Figur 2 einen Querschnitt durch zwei Abdeckkästen einer Ausführungsform der Abdeckung nach der Erfindung und

Figur 3 einen teilweisen Querschnitt mit perspektivischer Ansicht durch drei Abdeckkästen einer weiteren Ausführungsform bei zusammengeschobener Stellung der Kästen.

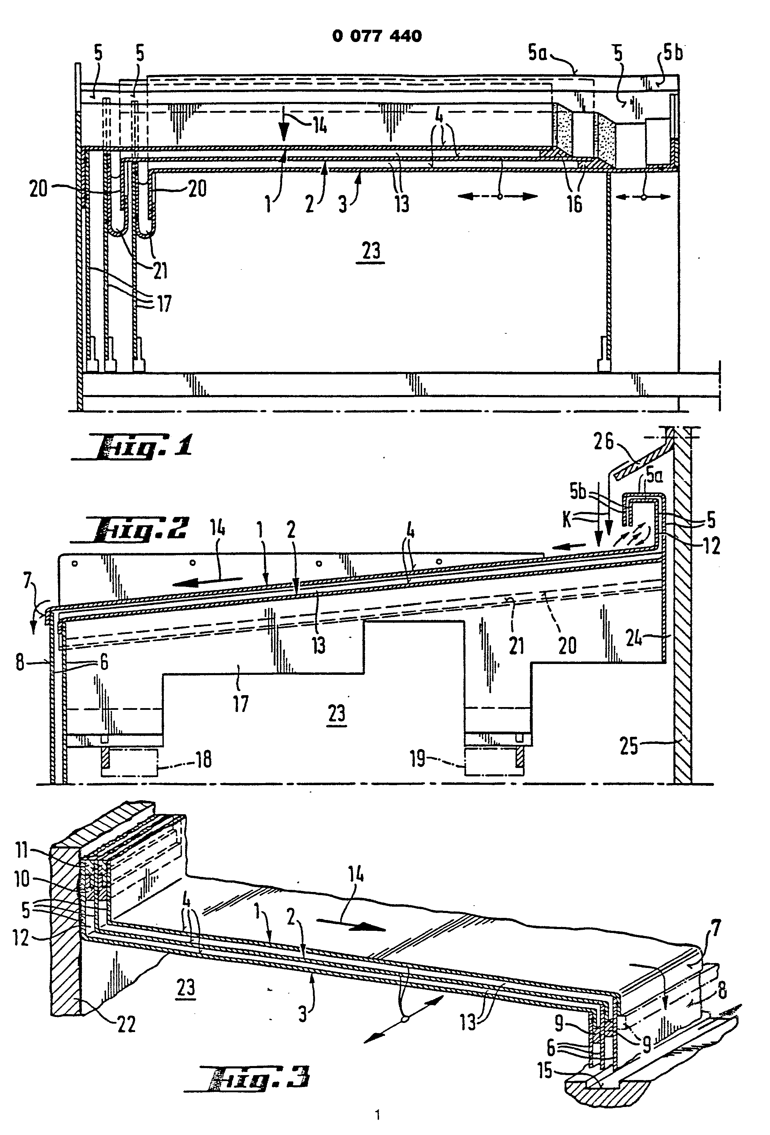

Die Abdeckung nach der Erfindung ist aus einer Anzahl von teleskopartig ineinanderschiebbaren Abdeckkästen 1, 2, 3 usw. gebildet, die stufenartig voneinander abweichende Größen besitzen und eine Deckwand 4 aufweisen. An dem einen Rand dieser Deckwand ist eine senkrecht nach oben gerichtete Seitenwand 5, am zweiten Rand der Deckwand 4 eine nach unten gerichtete Seitenwand 6 angeordnet (Fig. 2 und 3). Die nach unten gerichtete Seitenwand 6 jedes Abdeckkastens ist aus einer Abkantung 7 und einem daran befestigten Blechstreifen 8 gebildet, der an seiner, dem Maschinenbett im Raum 23 zugekehrten Innenseite einen Längsstreifen 9 trägt, der die Abkantung 7 des benachbarten Abdeckkastens untergreift.

Die senkrechten Seitenwände 5 besitzen gleichfalls nach innen und nach außen gerichtete winkelförmige Streifen 10, 11, die sich ebenfalls wieder unter- und übergreifen. Diese Streifen dienen dazu, ein Abheben der Abdeckung beim Zusammenschieben zu verhindern. Sie dienen auch als Dichtungsstreifen, damit kein Wasser und keine Späne in den Zwischenraum 12 zwischen die seitlichen Wände 5 und in den Zwischenraum 13 zwischen die Deckwände 4 der Abdeckung gelangen können.

Die Deckwände 4 sind, wie insbesondere Fig. 2 erkennen läßt, vorzugsweise gegen die nach unten gerichteten Seitenwände 6 hin geneigt, so daß Wasser und Späne in Richtung des Pfeiles 14 auf den Abdeckkästen seitlich abgleiten und in einer Rinne 15 am Maschinenbett aufgefangen und abgeführt werden können (Fig. 3). Im übrigen stützen sich die Abdeckkästen in bekannter Weise mit ihren Dichtungs- und Führungsstreifen 16 auf der Oberseite des nächst tiefer gelegenen Abdeckkastens ab und besitzen eine vordere Stirnwand 17, die sich rollend oder gleitend auf den Teilen 18, 19 des Maschinenbettes abstützen. An den Deckwänden 4 bzw. einer nach unten gerichteten Abwinklung 20 derselben ist in bekannter Weise für jeden Abdeckkasten eine Ablaufrinne 21 vorgesehen, die ebenfalls eine Neigung in Richtung der Seitenwände 6 haben kann, so daß von ihr aufgefangenes Wasser gleichfalls in die Rinne 15 abgeführt werden kann.

Fig. 2 und 3 veranschaulichen, daß die Abdeckung mit ihren senkrecht nach oben gerichteten Seitenwänden 5 längs einer Wand 22 bzw. 25 der Werkzeugmaschine gleiten, die sich an das Maschinenbett seitlich anschließen kann.

Um ein seitliches Auswölben der Abdeckung durch Schrägstellen der Kästen, ferner ein Aufwöllen der Abdeckung beim Zusammenschieben der Kästen an den Seitenwänden 5, insbesondere aber ein Hineingelangen von Wasser und Spänen in die Zwischenräume 12 und 13 von oben zwischen den Kästen zu vermeiden, sind die Seitenwände 5 mit gegen die Längsmitte der Abdeckung gerichtete Abwinklungen 5a versehen, die sich gleichfalls überdecken. Um das in Richtung der Pfeile K von der Oberseite des Abdeckkastens 1, 2 etc. abspritzende Wasser nicht in den Zwischenraum 24 zwischen den Seitenwänden 5 der Kästen und der Maschinenwand 25 gelangen zu lassen, ist bei der Ausführungsform nach Fig. 2 an die Abwinklung 5a angrenzend eine nach unten gerichtete Abkantung 5b vorgesehen, so daß das Wasser sich in dem Labyrinth aus den Wänden und Teilen 5, 5a, 5b fangen und von dort über die Deckwand 4 zu der Rinne 15 gelangen kann. Zur weiteren Sicherung des Zwischenraumes 24 und damit des Maschinenbettes gegen Späne und Wasser, können die Abwinklungen 5, 5a, 5b von einer dachförmigen Längsabdeckung 26 überragt werden, die an der Maschinenwand 25 befestigt ist.

Vorzugsweise ist in der Rinne 15 ein Längsfördermittel angeordnet, mit dessen Hilfe das Sprühwasser und die Späne abgefördert werden.

Der Abstand der unteren Kante der Abkantung 5b von der Deckplatte 4 ist vorzugsweise so gehalten, daß die Wand 5 und die Teile 5a, 5b eines Abdeckkastens durch Schwenken entgegen dem Uhrzeigersinn in Fig. 2 den von der gleichen Wand und den gleichen Teilen des nächst größeren Kastens begrenzten Raum eingebracht werden kann und so die Abdeckung von der Seite her zusammenzusetzen ist, wenn statt der hakenartig ineinandergreifenden Teile 10, 11 und der Abschnitte 7, 9 andersartige Dichtungsmittel verwandt werden.

**Patentansprüche**

1. Teleskopabdeckung für Werkzeugmaschinen mit teleskopartig übereinander verschiebbaren, sich auf dem Maschinenbett und aufeinander abstützenden, im Querschnitt etwa Z-förmigen und an einer Längsseite eine aufwärts, an der anderen Längsseite eine abwärts gerichtete Seitenwand aufweisenden Abdeckkästen (1-3), dadurch gekennzeichnet, daß die aufwärts gerichteten Seitenwände (5) der Abdeckkästen (1-3) sich übergreifende, gegen die Längsmitte der Abdeckung gerichtete horizontale oder annähernd horizontale Abwinklung (5a) aufweisen, an die sich abwärts gerichtete, ebenfalls überdeckende Abkantungen (5b) anschließen.

2. Teleskopabdeckung nach Anspruch 1, dadurch gekennzeichnet, daß die Abwinklungen (5a) und Abkantungen (5b) von einer ortsfesten dachförmigen Abdeckung (26) überdeckt sind.

3. Teleskopabdeckung nach Anspruch 1 und 2, dadurch gekennzeichnet, daß die Seitenwände (5, 6) der Abdeckkästen (1-3) hakenartige, sich gegenseitig über- und untergreifende Abdichtteile (7, 9 bzw. 10, 11) aufweisen.

4. Teleskopabdeckung nach Anspruch 1 und einem der Ansprüche 2 und 3, dadurch gekennzeichnet, daß der Abstand der unteren Kante (5c) der abwärts gerichteten Abkantung (5b) von der horizontalen oder annähernd horizontalen Deckwand (4) derart ist, daß die Abwinklung (5a) und die Abkantung (5b) des nächst kleineren Kastens unter diese Teile des nächst größeren Kastens von der Seite einschwenkbar sind.

**Claims**

1. A telescoping cover for machine tools with cover boxes (1 to 3) that are adapted to be slid over each other telescopingly and to be supported on the bed of the machine tool and on each other, said cover boxes being generally Z-like in cross section and having on one long side an upwardly directed side wall and on the other long side a downwardly directed side wall, characterized in that the upwardly directed side walls (5) of the cover boxes (1 to 3) have a level or generally level, overlapping angle part (5a) running towards the middle longitudinal line of the cover and next to such angle part there are downwardly directed angled edges (5b) that also have a covering function.

2. The telescoping cover as claimed in claim 1 characterized in that the angled parts (5a) and angled edges (5b) are covered by a stationary roof-like cover (26).

3. The telescoping cover as claimed in claims 1 and 2 characterized in that the side walls (5 and 6) of the cover boxes (1 to 3) have hook-like sealing parts (7 and 9 or 10 and 11) fitting over and under each other.

4. The telescoping cover as claimed in claim 1 and any one of the claims 2 and 3 characterized in that the distance of the lower edge (5c) of the downwardly directed bent edge (5b) from the level or generally level cover wall (4) is such that the angle part (5a) and the angled edge (5b) of the next smaller box may be rocked under these parts of the next larger box from the side.

**Revendications**

1. Recouvrement télescopique pour machines-outils au moyen de caissons de couverture (1 à 3) qui peuvent se déplacer télescopiquement les uns au-dessus des autres prennent appui sur le banc de la machine et les uns sur les autres, présentent en coupe une forme approximativement en Z et comportent sur l'un de leur côté longitudinal une paroi latérale tournée vers le haut et, sur leur autre côté longitudinal, une paroi latérale tournée vers le bas, caractérisé en ce que les parois latérales (5) des caissons de fermeture (1 à 3) qui sont tournées vers le haut comportent des parties pliées (5a) horizontales ou presque horizontales qui sont dirigées vers l'axe médian longitudinal de recouvrement et auxquelles se raccordent des bords pliés (5b) également couvrants, dirigés vers le bas.

2. Recouvrement télescopique selon la revendication 1, caractérisé en ce que les parties pliées (5a) et les bords pliés (5b) sont recouverts par une pièce couvrante fixe (26).

3. Recouvrement télescopique selon l'une des revendications 1 et 2, caractérisé en ce que les parois latérales (5, 6) des caissons de couverture (1 à 3) comportent des parties de joints étanches (7, 9 ou 10, 11) qui se recouvrent réciproquement par en haut et par en bas.

4. Recouvrement télescopique selon la revendication 1 et l'une des revendications 2 et 3, caractérisé en ce que la distance entre l'arête inférieure (5c) du bord plié (5b) dirigé vers le bas et la paroi couvrante (4) horizontale ou presque horizontale est telle que la partie pliée (5a) et le bord plié (5b) du caisson de couverture de dimensions inférieures le plus proche puisse s'engager par pivotement, de côté, sous les mêmes parties du caisson de dimensions supérieures le plus proche.

**Fig.1**

**Fig.2**

**Fig.3**